**Europäisches Patentamt**

**European Patent Office**

**Office européen des brevets**

(19)

(11) Veröffentlichungsnummer : **0 551 315 B1**

(12) **EUROPÄISCHE PATENTSCHRIFT**

(45) Veröffentlichungstag der Patentschrift :
06.04.94 Patentblatt 94/14

(51) Int. Cl.$^5$ : **A47B 31/00, A47J 47/16**

(21) Anmeldenummer : **91916898.9**

(22) Anmeldetag : **03.10.91**

(86) Internationale Anmeldenummer :
**PCT/DE91/00779**

(87) Internationale Veröffentlichungsnummer :
**WO 92/05723 16.04.92 Gazette 92/09**

(54) **ABLAGE- UND TRANSPORTSYSTEM, INSBESONDERE FÜR GASTRONOMIEZWECKE.**

(30) Priorität : 04.10.90 DE 4031308
15.03.91 DE 4108356

(43) Veröffentlichungstag der Anmeldung :
21.07.93 Patentblatt 93/29

(45) Bekanntmachung des Hinweises auf die
Patenterteilung :
06.04.94 Patentblatt 94/14

(84) Benannte Vertragsstaaten :
AT BE CH DE DK ES FR GB GR IT LI LU NL SE

(56) Entgegenhaltungen :
EP-A- 0 373 127

(56) Entgegenhaltungen :
DE-A- 2 613 163
DE-U- 8 914 138
FR-A- 988 858
FR-A- 2 042 216

(73) Patentinhaber : BOHNER, Hubert
Dellenhag 8
D-88339 Bad Waldsee (DE)

(72) Erfinder : BOHNER, Hubert
Dellenhag 8
D-88339 Bad Waldsee (DE)

(74) Vertreter : Patentanwälte Dipl.-Ing. E. Eisele
Dr.-Ing. H. Otten
Seestrasse 42
D-88214 Ravensburg (DE)

## Beschreibung

Die Erfindung betrifft ein Ablage- und Transportsystem, insbesondere für Gastronomiezwecke, nach dem Oberbegriff des Anspruchs 1.

Ein für Teller bestimmtes fahrbares Traggestell, welches als wichtiges Element eines solchen Systems angesehen werden kann, ist aus dem US-Patent 4 911 308 bekannt. Es dient zur Aufnahme einer Vielzahl von Tellern, die auf Haltestäben ruhend ohne sich zu berühren übereinander angeordnet sind. Auf den Tellern können Speisen, insbesondere kalte Vorspeisen, angerichtet sein. Mit Hilfe eines solchen Tellergestells wird in einer Großküche die Arbeitsfläche frei. Die angerichteten Teller können auf dem Gestell in einen Kühlraum gefahren und später zum Servieren in einen Speisesaal verbracht werden.

Bei dem bekannten Traggestell sind die Haltestäbe an den Vierkantsäulen fest angebracht. Das Gestell läßt sich nicht zerlegen und nicht für andere Gegenstände als Teller bestimmter Größe verwenden. Diese Teller können außerdem nur einzeln in das Traggestell eingefügt und aus diesem entnommen werden.

Um zu vermeiden, daß die aufgelegten Teller schaukeln und bei Stößen, z. B. beim Überfahren einer Türschwelle, aus der Halterung rutschen und herabfallen können, steigen die Haltestäbe von den Vierkantsäulen weg leicht an. Die dadurch bewirkte Schräglage der Teller hat jedoch den Nachteil, daß die flüssigen Bestandteile der darauf angerichteten Speisen nach einer Seite laufen. Das zwingt dazu, nur Teller mit entsprechend verfestigten Speisen aufzulegen.

Die deutsche Offenlegungsschrift 26 13 163 beschreibt ein tragbares Stapel- und Serviergestell für Teller mit angerichteten Speisen. Es umfaßt einen Fußrahmen und drei vertikale, im Dreieck angeordnete Schenkel, wobei der Abstand eines Schenkels zu den beiden übrigen auf verschiedene Tellerdurchmesser einstellbar ist. Jeder Teller liegt einerseits auf einer bogenförmigen Sprosse und andererseits auf einem kurzen Haltedaumen auf. Zum Transport können zwei solcher Stapel- und Serviergestelle nebeneinander auf einen Servierwagen gestellt werden.

Schließlich ist in der französischen Patentschift FR-A-988 858 ein Traggestell für aus Topf und Deckel bestehende geschlossene Kochgeschirre dargestellt. Es dient dazu, mehrere übereinandergestapelte Kochgeschirre in einen gemeinsamen Warmhalte- und Schutzbehälter einzubringen, darin geordnet festzuhalten und wieder herauszunehmen.

Der Erfindung liegt die Aufgabe zugrunde, ein Ablage- und Transportsystem der einleitend bezeichneten Art zu schaffen, das im Küchen- und Servierbetrieb variabel und auch für andere Gegenstände, z. B. Tabletts, Flaschen oder Gläser, einsetzbar ist. Es soll eine gemeinsame Beschickung und Entladung ganzer Gruppen dieser Gegenstände möglich sein. Darüber hinaus sollen die Halteeinrichtungen für die einzelnen Teller so beschaffen sein, daß sie eine stabile Halterung derselben bewirken, daß die Teller darin stets eine genau horizontale Lage einnehmen und daß die Teller unter diesen Voraussetzungen verhältnismäßig große Form- und Größenunterschiede aufweisen können.

Die vorgenannte Aufgabe wird durch die kennzeichnenden Merkmale des Anspruchs 1 gelöst. Die Einsätze sind Einzelgestelle zur Aufnahme von Tellern oder anderen Gegenständen, wobei am Traggestell z. B. acht Einsätze angehängt werden können. Somit ist es möglich, das Traggestell selbst je nach Bedarf mit anderen, auch mit mehreren unterschiedlichen Einsätzen auszustatten und so zum Transport oder zur Ablage der verschiedenen Gegenstände zu verwenden. Wichtig ist auch die Ablage und der Transport von Tabletts, wobei je zwei am Traggestell angehängte entsprechende Einsätze als Träger für mehrere mit Geschirr belegte Tabletts zusammenwirken. Die Einsätze können als stehfähige Einzelgestelle ausgebildet und außerdem mit Hilfe besonderer Wandhalterungen an der Wand aufhängbar sein, was den Vorteil hat, daß sie außerhalb des Traggestells beschickt und entladen, d. h. auch selbständig verwendet werden können. Somit bilden die im folgenden näher erläuterten Elemente nach der Erfindung ein außerordentlich variables Ablage- und Transportsystem für Gastronomiebetriebe.

Vorzugsweise haben die Einsätze jeweils einen rechteckigen Rahmen mit horizontalen und vertikalen Schenkeln, dessen Breite etwa dem Abstand zweier benachbarter Vierkantsäulen des Traggestells entspricht und der im Bereich seiner Ecken einhängbar ist in Haken, die an den Vierkantsäulen befestigt sind. Als Haken sind zweckmäßigerweise U-förmig gebogene Bügel vorgesehen, die mit ihrem Steg so an der zur Mitte gewandten Fläche jeder Vierkantsäule angebracht sind, daß die Schenkel der Bügel nach oben weisen. Jeder Bügel bildet also einen Doppelhaken, der an zwei benachbarten Einsätzen mitträgt. Entsprechend der Absicht, die Handhabung der Einsätze so einfach wie möglich zu gestalten, ist somit eine sichere und ergonomisch günstige Vierpunkt-Einhängevorrichtung für die Einsätze geschaffen, die außerdem fertigungsmäßig einfach ist.

Um den Einsätzen für Teller, Gläser, Flaschen und dergleichen die erforderliche Standfestigkeit zu verleihen und die Möglichkeit zum Einbau der entsprechenden Halteeinrichtungen zu schaffen, wird vorgeschlagen, daß der einfache Rechteckrahmen, der als Aufhängeelement dient, erweitert und mit Füßen versehen wird. Demnach ist vorgesehen, daß in der Mitte des oberen und unteren horizontalen Schenkels des Rahmens ein

2

rechtwinklig U-förmiger Bügelteil senkrecht zur Rahmenebene ansitzt, dessen Steg einen dritten vertikalen Schenkel bildet und dessen verlängerter unterer horizontaler Schenkel den unteren Schenkel des Rahmens kreuzt, wobei an den Enden dieser Schenkel Füße angebracht sind. Die vier Füße können zur weiteren Verbesserung der Standfestigkeit mit Kappen oder anderen Teilen aus einem elastischen Werkstoff versehen sein.

An den drei vertikalen Schenkeln lassen sich Halteeinrichtungen für die einzelnen Gegenstände anbringen. Zur besonderen Verwendung für Teller wird vorgeschlagen, daß in dem Einsatz mehrere Tellerhalter in Form horizontaler kreisrunder Ringe in Abständen übereinander angebracht sind. Die Ringe können mit Hilfe von je drei nach außen radial abstehenden Stützen an den drei vertikalen Schenkeln des Einsatzes befestigt sein. Auf den Ringen liegen die Teller ringsum auf, so daß einerseits ihre horizontale Ausrichtung und andererseits ihre stoßfeste und stabile Halterung gesichert ist. Auch können in einen Ring vorteilhafterweise Teller vieler verschiedener Größen eingefügt werden, sofern nur der Tellerdurchmesser den Ringdurchmesser übersteigt. An den Ringen können in Abständen Dämpfer aus Kunststoff angebracht sein, die Klappergeräusche beim Fahren weitgehend verhindern.

Um Tabletts oder andere wannenförmige Behälter, wie sie in der Gastronomie üblich sind, an dem Traggestell anbringen zu können, dürfen die Tabletts nicht breiter als der Abstand der Vierkantsäulen des Traggestells sein, so daß sie zwischen diesen Säulen eingeschoben werden können. Als Auflage für die Tabletts dienen spezielle Einsätze, die paarweise zusammenwirken. Diese Einsätze sind als Rechteckrahmen ausgebildet, die an ihren vertikalen Schenkeln in Abständen übereinander ansitzende, nach einer Seite weisende horizontale Bügel aufweisen, auf denen die Tabletts mit ihren Längsrändern aufliegen. Diese Einsätze werden an gegenüberliegenden Seiten des Traggestells so eingehängt, daß die Bügel nach innen stehen, d. h. einander gegenüberliegen. Die Bügel haben einen geradlinigen horizontalen Mittelabschnitt und daran beidseitig anschließende, nach unten weisende Schenkelabschnitte, die mit ihren Endabschnitten in die Horizontalebene abgeknickt sind und an den vertikalen Schenkeln des Einsatzes ansitzen.

Außer Tabletts können die Bügel auch tiefere Wannen aufnehmen, die ringsum nach unten gekantete Ränder haben. Die Bügel greifen von unten hinter die Abkantungen der Längsränder, während die Abkantungen der Querränder an den Bügeln anstoßen, weil diese Wannen nur wenig länger als die Bügel sind. Dadurch ist sichergestellt, daß die Wannen beim Verfahren des Traggestells nicht herausrutschen können.

Als Einsatz für Trinkgläser und Getränkeflaschen eignet sich am besten die tragende Grundform in Gestalt eines Rahmengestells mit drei im Dreieck angeordneten vertikalen Schenkeln, wie sie oben als Tellergestell vorgeschlagen wurde. Die Flaschen werden am besten liegend und schräg nach innen geneigt aufgenommen, während man Stielgläser am Fuß aufhängen kann. Es ist aber auch daran zu denken, einen Abfallbehälter, einen Thermosbehälter für warme Speisen oder irgendeinen anderen Gegenstand in solch einen Einsatz einzubauen, so daß dieser Spezialeinsatz zusammen mit anderen Einsätzen am gleichen Traggestell eingehängt werden kann.

Schließlich wird ein Wandhalter vorgeschlagen, der es ermöglicht, die beschriebenen Einsätze für Gläser und Flaschen, insbesondere aber für Teller schwingungsfrei aufzuhängen. Dazu ist eine Drei-Punkt-Halterung vorgesehen in der Weise, daß einerseits der obere horizontale Schenkel des Rechteckrahmens und andererseits der hintere Fuß des Einsatzes gefaßt wird. Der Halter hat dazu die Gestalt eines Rahmens, von dessen oberer Partie zwei Tragarme mit Haken an ihren Enden nach vorn abstehen und dessen untere Partie eine Öse aufweist, wobei die Haken den oberen horizontalen Schenkel und die Öse den hinteren Fuß des Einsatzes aufnehmen. Insbesondere kann der Halter ein Rechteckrahmen sein. Die Tragarme sollten Befestigungsschenkel haben, die einmal in der Rahmenebene abgewinkelt sind, um ihnen durch einfaches Zusammenschweißen an den Kreuzungsstellen der Drahtabschnitte eine ausreichende Festigkeit zu geben. Die Öse kann durch einen nach vorn ausgebauchten horizontalen Querschenkel gebildet werden. Derartige Wandhalterungen haben den Vorteil, daß die Einsätze platzsparend untergebracht werden können und die Arbeitsflächen in der Küche frei bleiben, obwohl die Einsätze zum Einlegen und Entnehmen von Gegenständen griffbereit sind.

Alle erwähnten Einsätze werden vorzugsweise aus verchromtem Draht gefertigt.

Das vorgeschlagene System stellt für Großküchen- und Gastronomiebetriebe ein außerordentliches vielfältiges und an die jeweiligen Anforderungen anpaßbares Hilfsmittel dar. Einerseits wird das Anrichten, die Zwischenlagerung und das Servieren von Portionstellern in großen Mengen erleichtert und beschleunigt. Andererseits kann das System aber auch beim Eindecken großer Tafeln sowie beim Abräumen behilflich sein.

Es ist aber auch daran zu denken, daß sich das vorgeschlagene Ablage- und Transportsystem nicht auf den Gastronomiebereich beschränkt, sondern auch in fabrikatorischen Fertigungsunternehmen eine innerbetriebliche Verwendung finden kann, wenn z. B. gleichartige Werkstücke oder andere Produkte zwischengelagert und von einer Bearbeitungsstelle zu einer anderen weiter transportiert werden müssen.

Ein Ausführungsbeispiel der Erfindung wird nachfolgend anhand der Zeichnung beschrieben. Im einzelnen zeigt

Fig. 1    eine Seitenansicht eines fahrbaren Traggestells, bestückt mit Tellereinsätzen,

3

Fig. 2      die Draufsicht des Traggestells nach Fig. 1,

Fig. 3      eine räumliche Darstellung eines der acht Tellereinsätze des Traggestells nach Fig. 1,

Fig. 4      eine Darstellung der Einzelheit IV gemäß Fig. 2 in größerem Maßstab,

Fig. 5      eine Seitenansicht des unteren Teils des fahrbaren Traggestells, hier mit Tabletteinsätzen bestückt,

Fig. 6      eine Teilansicht des Traggestells nach Fig. 1 in Richtung des Pfeiles VI und

Fig. 7      eine räumliche Darstellung eines Wandhalters, beispielsweise für einen Tellereinsatz nach Fig. 3.

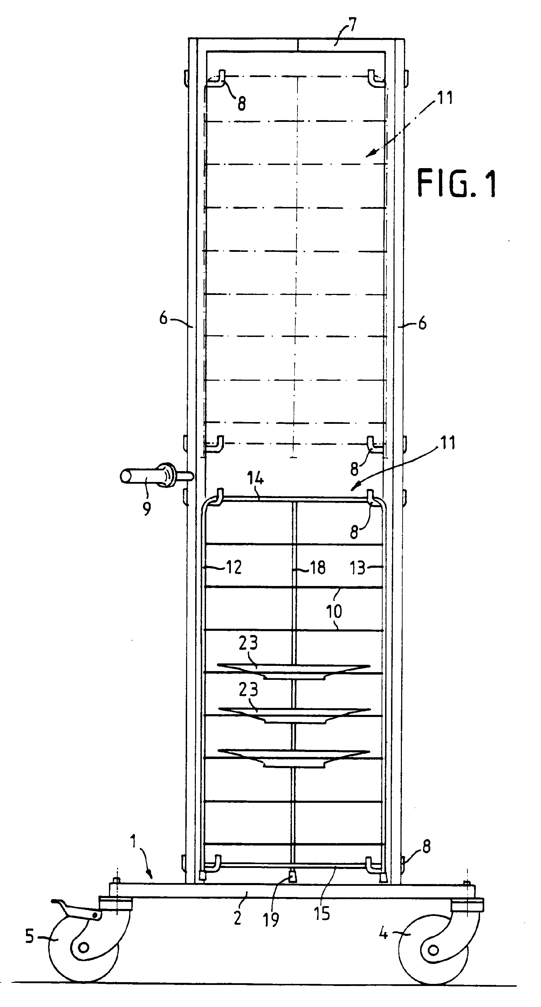

Das Traggestell nach Fig. 1 hat einen horizontalen quadratischen Grundrahmen 1 aus Vierkantrohr, bestehend aus vier Rahmenschenkeln 2 und zwei parallelen Querstreben 3. An den vier Ecken des Grundrahmens 1 sind vier Lenkrollen 4, 5 angebracht. Die beiden Lenkrollen 5 sind feststellbar.

Auf den Querstreben 3 sind in quadratischer Grundrißanordnung vier Vierkantsäulen 6 befestigt, deren obere Enden durch horizontale, sich kreuzende Diagonalstreben 7 miteinander verbunden sind. Die Querschnittsanordnung der Vierkantsäulen 6 ist so getroffen, daß deren Seitenflächen parallel zu den Diagonalstreben 7 verlaufen, d. h. die Innenflächen der Vierkantsäulen 6 einander paarweise diagonal gegenüberliegen. An diesen Innenflächen sind U-förmige Bügel 8 aus Rundstahl mit nach oben weisenden Schenkeln angeschweißt. Jede Vierkantsäule 6 trägt vier solche Bügel, einen unten, einen oben und zwei im mittleren Bereich. Schließlich sind an zwei Vierkantsäulen, nämlich auf der Seite der feststellbaren Lenkrollen 5 Handgriffe 9 angebracht, mit deren Hilfe das Traggestell geschoben und dirigiert werden kann. Diese Handgriffe 9 ragen nicht über den Grundrahmen 1 hinaus.

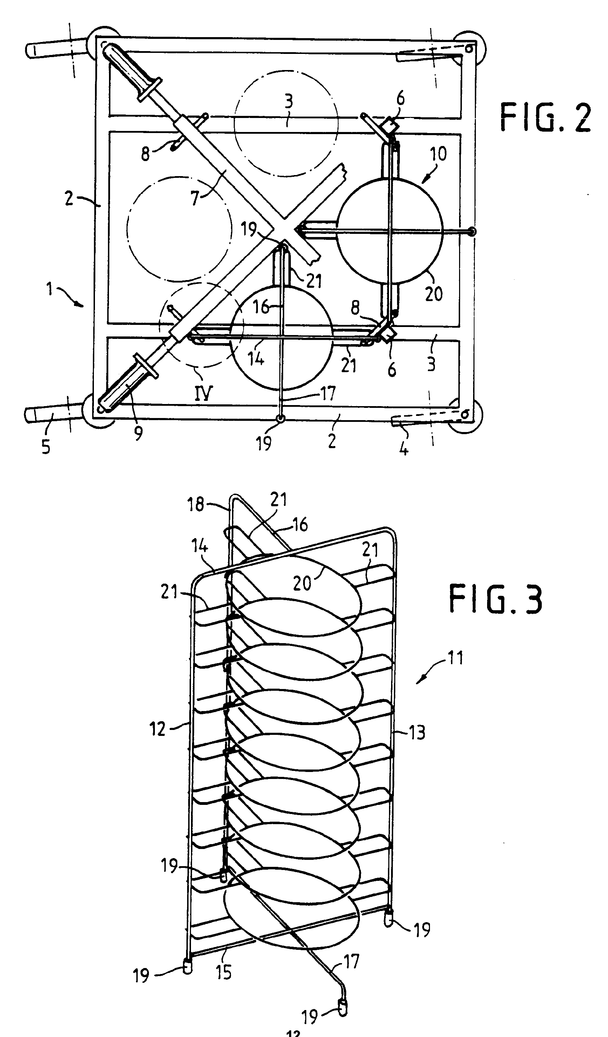

Der Einsatz 11 gemäß Fig. 3, der aus verchromtem Stahldraht gefertigt ist, besteht aus einem Rahmengestell und acht Halteeinrichtungen 10 für Teller 23. Das Rahmengestell aus Runddraht mit etwa 8 mm Durchmesser umfaßt einen rechteckigen Rahmen aus vertikalen Schenkeln 12 und 13 sowie einen oberen horizontalen Schenkel 14 und einen unteren horizontalen Schenkel 15. Die Schenkel 12 bis 14 sind aus einem Stück U-förmig gebogen, der Schenkel 15 ist eingefügt. Senkrecht zur Ebene dieses Rahmens ist ein Bügelteil angefügt, dessen oberer horizontaler Schenkel 16 etwa in der Mitte des Schenkels 14 ansitzt, während der längere untere horizontale Schenkel 17 den Schenkel 15 kreuzt und mit diesem verbunden ist. Der Steg des Bügelteils bildet den dritten vertikalen Schenkel 18 des Rahmengestells. Die unteren Enden der drei vertikalen Schenkel 12, 13 und 18 stehen ein wenig über die unteren horizontalen Schenkel hinaus und bilden die Füße des Rahmengestells, wobei das nach unten abgewinkelte freie Ende des horizontalen Schenkels 17 den vierten Fuß bildet. Auf die Füße sind Gummikappen 19 aufgesteckt.

Die Halteeinrichtungen 10 dieses Beispiels sind aus Runddraht von etwa 4 mm Durchmesser gefertigt und bestehen aus einem kreisförmigen Ring 20, der mittels dreier U-förmiger Stützen 21 mit den drei vertikalen Schenkeln verbunden ist. Die U-Schenkel der Stützen 21 sind am Ring 20 befestigt, so daß die gesamte Halteeinrichtung 10 eine Ebene bildet. Alle Verbindungen der beschriebenen Einzelteile sind, wie in der Drahttechnik üblich, geschweißt. Die Abstände der übereinander angeordneten horizontalen Halteeinrichtungen betragen im Beispiel etwa 8 cm. Das ganze Traggestell ist etwa 1,60 m hoch.

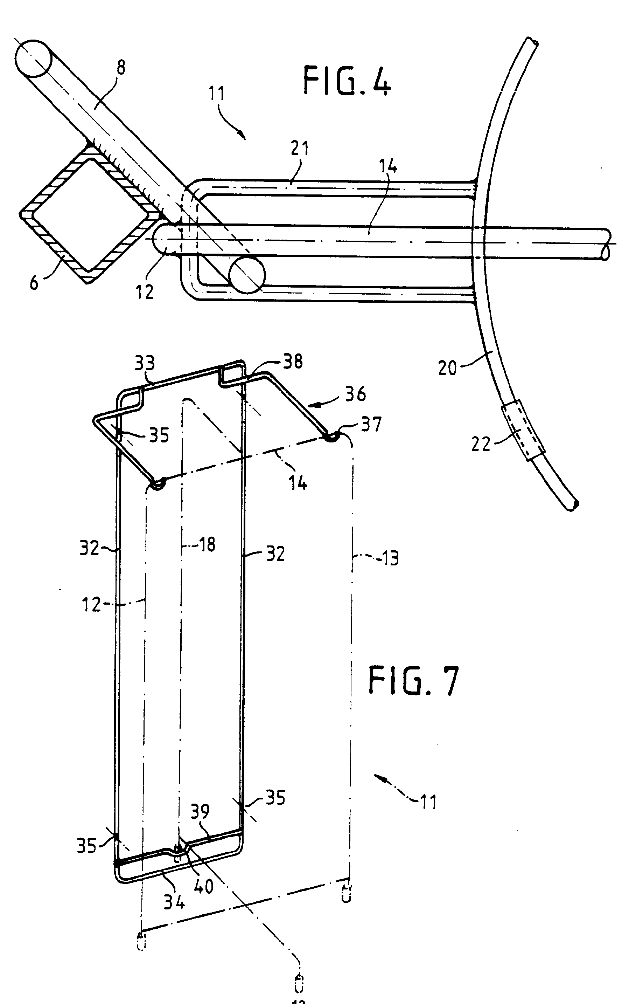

Wie die Darstellungen nach Fig. 1 und Fig. 4 zeigen, sind die Einsätze mit ihren horizontalen Schenkeln 14 und 15 über je zwei der Bügel 8 gehängt und dadurch oben und unten festgehalten. Genauerhin ist dabei nur die Hälfte jedes Bügels 8 beteiligt, der mit seinem betreffenden Schenkel einen rechtwinkligen Haken bildet. Die vertikalen Schenkel 12 und 13 des Einsatzes liegen dabei an den Seitenflächen der Vierkantsäulen 6 an, wodurch das Einhängen bzw. Einfügen erleichtert wird. Insgesamt vermag das Traggestell acht Einsätze 11 aufzunehmen, wobei an den vier Seiten je zwei Einsätze übereinander angeordnet sind. In Fig. 1 ist der untere voll ausgezogen dargestellt und der obere nur strichpunktiert angedeutet. Die Teller 23 werden in die Ringe 20 eingesetzt, wobei kleine aufgeklemmte Kunststoffschlauch-Stückchen 22 ein Verrutschen der Teller 23 und jedes Klappern vermeiden.

Die, wie beschrieben, mit der Hand einfach herausziehbaren Einsätze, die man im mittleren Bereich der oberen horizontalen Schenkel 14 und 16 hält, können mit oder ohne Tellerladung überall abgestellt werden. Läßt man die Halteeinrichtungen 10 weg, so können an den verbleibenden Rahmengestellen der Einsätze 11 andere Halteeinrichtungen für Flaschen, Gläser usw. angebracht werden. Beispielsweise kann in dem Einsatz ein Kunststoffsack mit aufgespannter Öffnung als Abfallbehälter eingesetzt sein.

Falls die Teller besonders groß sind und möglicherweise mit den Rändern aneinander stoßen, können die Bügel 8 an zwei einander gegenüberliegenden Seiten des Gestells bezüglich der übrigen Bügel ein wenig höher oder niedriger angebracht werden, so daß auch die Einsätze höhenmäßig versetzt sind.

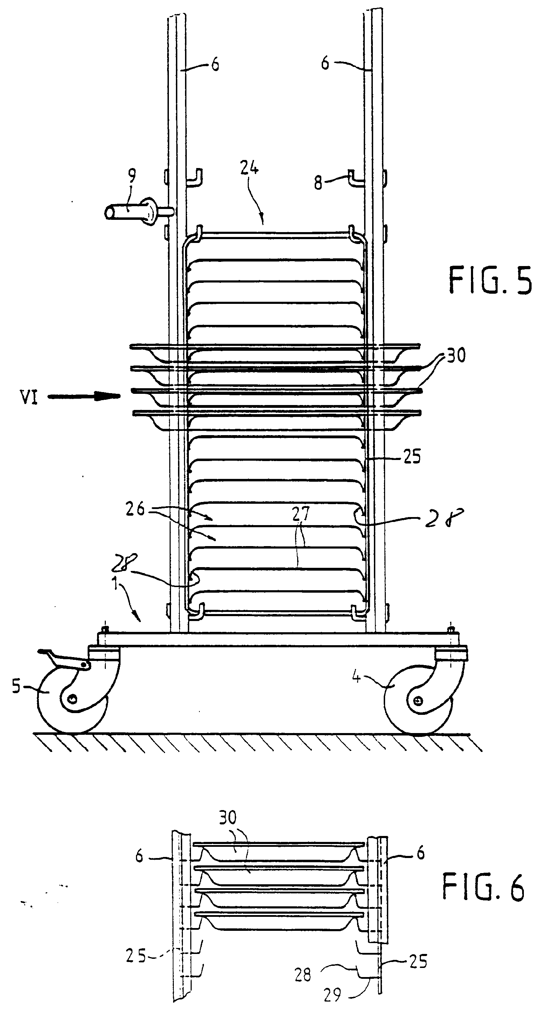

Nach den Figuren 5 und 6 sind an zwei gegenüberliegenden Seiten des gleichen Traggestells, wie in Fig. 1 dargestellt, ein Einsatz 24 eingehängt. Jeder dieser Einsätze besteht aus einem rechteckigen Rahmen gleicher Abmessungen wie der Rahmen 12, 14, 13, 15 nach Fig. 3 aus 8 mm-Runddraht. Wieder wird der obere und untere horizontale Querschenkel von je zwei durch die Bügel 8 gebildeten Haken umgriffen, so daß die beiden vertikalen Schenkel 25 an den Seitenflächen der entsprechenden Vierkantsäulen 6 in Anlage gehalten werden. An jedem Einsatz 24 sind sechzehn Bügel 26 aus einem etwas dünneren Runddraht befestigt. Sie bestehen aus einem Mittelabschnitt 27, zwei anschließenden schrägen Schenkelabschnitten 28 und zwei parallelen horizontalen Endabschnitten 29, die an den vertikalen Schenkeln 25 des Einsatzes befestigt sind. Die Einsätze 24 werden so am Traggestell angehängt, daß die Bügel 26 nach innen stehen. Somit bilden die Mittelabschnitte 27 zweier auf gleicher Höhe sich gegenüberliegender Bügel 26 Auflageschienen, auf die ein zwischen die Vierkantsäulen 6 passendes Tablett 30 mit seinen Längsrändern aufgelegt werden kann. Diese Form der Bügel 26 erlaubt ein griffgünstiges Einschieben und Herausnehmen der Tabletts 30, von denen sechzehn im unteren Teil des Traggestells untergebracht werden können. Durch Anhängen zweier weiterer Einsätze 24 können im oberen Teil des Traggestells noch einmal sechzehn Tabletts untergebracht werden und zwar wahlweise auch quer zu den unteren Tabletts.

Das beschriebene System kann mit verschiedenen Ergänzungsteilen erweitert werden. So ist es z. B. zweckmäßig, runde Tabletts mit Rand, wie sie zum Servieren von Getränken verwendet werden, sowie Kuchengitter und Tortenplatten unterseitig mit derart angeordneten Füßchen oder ringförmigen Vorsprüngen zu versehen, daß diese Flachteile in die Ringe 20 der Einsätze 11 eingelegt werden können, ohne zu verrutschen. Weitere erwähnenswerte Ergänzungsteile sind Besteck- oder Abfallkörbe, die an den Bügeln 26 der Einsätze 24 angehängt werden können.

Die Figur 7 schließlich zeigt einen Wandhalter für den beschriebenen Tellereinsatz 11 oder andere Einsätze, die gleiche Rahmengestelle haben. Der Wandhalter ist für diesen Rahmengestelltyp konzipiert. Er faßt den strichpunktiert angedeuteten Einsatz 11 an drei Stellen, nämlich am oberen horizontalen Schenkel 14 zweifach und am hinteren Fuß. Damit ist der Einsatz sicher und schwingungsfrei gehalten.

Der Wandhalter besteht aus einem rechteckigen Rahmen mit zwei vertikalen Längsschenkeln 32 und einem oberen und unteren horizontalen Querschenkel 33 bzw. 34. Er kann mit Hilfe von je zwei Bohrungen 35 in den Längsschenkeln an der Wand angeschraubt werden. Im Bereich der oberen Ecken des Rechteckrahmens sind zwei horizontale nach vorn stehende Tragarme 36 angebracht, an deren freien Enden je ein Haken 37 angeformt ist. Die Haken haben ferner zweimal rechtwinklig abgebogene Befestigungsschenkel 38, die spiegelbildlich so angeordnet sind, daß sie einmal den Längsschenkel 32 und einmal den oberen Querschenkel 33 kreuzen. An den Kreuzungsstellen sind die Teile durch Schweißung miteinander verbunden. In geringem Abstand parallel zum unteren Querschenkel 34 ist ein weiterer Querschenkel 39 vorgesehen, der in der Mitte eine nach vorn stehende Auswölbung 40 aufweist. Hier greift der hintere Fuß des einzuhängenden Rahmengestells ein, während dessen oberer horizontaler Schenkel 14 in den Haken 37 liegt.

Alle beschriebenen Teile bestehen vorzugsweise aus Rundstahl von 3, 5 oder 8 mm Durchmesser. Die Oberfläche kann verchromt, mit Kunststoff beschichtet oder auf andere Weise gegen Korrosion und anhaftendem Schmutz geschützt werden. Die feste Verbindung der Einzelteile geschieht in der Regel durch Widerstandsschweißung und zwar, wie schon erwähnt, vorzugsweise an den Kreuzungsstellen.

| | |
|---|---|
| 1 Grundrahmen | 33 Querschenkel |
| 2 Rahmenschenkel | 34 Querschenkel |
| 3 Querstrebe | 35 Bohrung |
| 4 Lenkrolle | 36 Tragarm |
| 5 Lenkrolle | 37 Haken |
| 6 Vierkantsäulen | 38 Befestigungsschenkel |
| 7 Diagonalstrebe | 39 Querschenkel |
| 8 Bügel | 40 Auswölbung |
| 9 Handgriff | |
| 10 Halteeinrichtung | |
| 11 Einsatz | |
| 12 Schenkel, vertikal | |
| 13 Schenkel, vertikal | |
| 14 Schenkel, horizontal, oben | |
| 15 Schenkel, horizontal, unten | |
| 16 Schenkel, horizontal, oben | |
| 17 Schenkel, horizontal, unten | |
| 18 Schenkel, vertikal | |
| 19 Kappe | |
| 20 Ring | |
| 21 Stütze | |
| 22 Schlauchstück | |
| 23 Teller | |
| 24 Einsatz | |
| 25 vertikaler Schenkel | |
| 26 Bügel | |
| 27 Mittelabschnitt | |
| 28 Schenkelabschnitt | |
| 29 Endabschnitt | |
| 30 Tablett | |
| 32 Längsschenkel | |

**Patentansprüche**

1. Ablage- und Transportsystem, insbesondere für Gastronomiezwecke, mit einem fahrbaren (4, 5) Traggestell aus vier im Quadrat angeordneten vertikalen Vierkantsäulen (6), die mit ihren Seitenflächen parallel zu den Diagonalen des Quadrats ausgerichtet und oben (7) und unten (1) miteinander verbunden sind, dadurch gekennzeichnet, daß an den Vierkantsäulen (6) anhängbare Einsätze (11, 24) vorgesehen sind, die mehrere Halteeinrichtungen (10, 27) für abzulegende oder zu transportierende Gegenstände (23, 30) aufweisen, und daß die Einsätze (11, 24) jeweils einen rechteckigen Rahmen mit horizontalen und vertikalen Schenkeln (14, 15 bzw. 12, 13; 25) aufweisen, dessen Breite etwa dem Abstand zweier benachbarter Vierkantsäulen (6) des Traggestells entspricht, und der im Bereich seiner vier Ecken in an den Vierkantsäulen (6) befestigten Haken eingehängt ist.

2. System nach Anspruch 1, dadurch gekennzeichnet, daß die Haken durch U-förmig gebogene Bügel (8) gebildet sind, die an den zur Mitte gewandten Flächen der Vierkantsäulen (6) mit ihrem Steg so angebracht sind, daß ihre Schenkel nach oben weisen.

3. System nach Anspruch 1, dadurch gekennzeichnet, daß bei den Einsätzen (11) in der Mitte des oberen und unteren horizontalen Schenkels (14 bzw. 15) ihres Rahmens ein rechtwinklig U-förmiger Bügelteil senkrecht zur Rahmebene ansitzt, dessen Steg einen dritten vertikalen Schenkel (18) bildet und dessen verlängerter unterer horizontaler Schenkel (17) den unteren Schenkel (15) des Rahmens kreuzt, wobei an den Enden dieser Schenkel Füße angebracht sind.

4. System nach Anspruch 3, dadurch gekennzeichnet, daß an den Einsätzen (11) mehrere für Teller (23) bestimmte Halteeinrichtungen (10) in Form horizontaler kreisrunder Ringe (20) in Abständen übereinander angebracht sind.

5. System nach Anspruch 4, dadurch gekennzeichnet, daß die Ringe (20) mit Hilfe von je drei nach außen radial abstehenden Stützen (21) an den drei vertikalen Schenkeln (12, 13, 18) des Einsatzes (11) befestigt sind.

6. System nach Anspruch 5, dadurch gekennzeichnet, daß die Ringe (20) mit Dämpfern (22) aus Kunststoff versehen sind.

7. System nach Anspruch 1, dadurch gekennzeichnet, daß die Einsätze (24) an ihren vertikalen Schenkeln (25) in Abständen übereinander ansitzende, nach einer Seite weisende horizontale Bügel (26) aufweisen und daß die gegeneinander stehenden Bügel (26) zweier an entgegengesetzten Seiten des Traggestells angehängter Einsätze (24) als Auflageschienen für Tabletts (30) dienen.

8. System nach Anspruch 7, dadurch gekennzeichnet, daß die Bügel (26) einen geradlinigen Mittelabschnitt (27) und daran beidseitig anschließende, nach unten weisende Schenkelabschnitte (28) haben, die mit ihren Endabschnitten (29) in die Horizontalebene abgeknickt sind und an den vertikalen Schenkeln (25) des Einsatzes (24) ansitzen.

9. System nach Anspruch 1, dadurch gekennzeichnet, daß an den Einsätzen Halterungen für Getränkeflaschen und/oder Trinkgläser angebracht sind.

10. System nach Anspruch 3, gekennzeichnet durch einen zur Aufnahme eines Einsatzes (11) bestimmten, an einer Wand befestigbaren Halter in Gestalt eines Rahmens (32, 33), von dessen oberer Partie zwei Tragarme (36) mit Haken (37) an ihren Enden nach vorn abstehen und dessen untere Partie eine Öse aufweist, wobei die Haken (37) den oberen horizontalen Schenkel (14) des Einsatzes (11) aufnehmen und die Öse den hinteren Fuß des Einsatzes umfaßt.

11. System nach Anspruch 10, dadurch gekennzeichnet, daß der Halter einen Rechteckrahmen (32, 33) aufweist, daß die Tragarme (36) Befestigungsschenkel (38) haben, die einmal in der Rahmenebene abgewinkelt sind, und daß die Öse durch einen nach vorn ausgebauchten (40) Querschenkel (39) gebildet wird.

12. System nach Anspruch 1, dadurch gekennzeichnet, daß die Einsätze (11, 24) aus verchromtem Draht gefertigt sind .

13. System nach Anspruch 10, dadurch gekennzeichnet, daß der Halter (Fig. 7) aus verchromtem Draht gefertigt ist.

## Claims

1. A storage and transport system, particularly for gastronomic purposes, with a mobile (4, 5) supporting frame consisting of, disposed in a square, four vertical square-section columns (6) which have their lateral surfaces aligned parallel with the diagonals of the square and which are connected to one another at the top (7) and at the bottom (1), characterised in that inserts (11, 24) are provided which can be suspended from the square-section columns (6) and comprise a plurality of means (10, 27) for holding objects (23, 30) which are to be stored or transported and in that the inserts (11, 24) each have a rectangular frame with horizontal and vertical members, (14, 15 or 12, 13; 25), the width of which corresponds substantially to the distance between two adjacent square-section columns (4) of the supporting frame and which is at its four corners suspended by hooks fixed to the square-section columns (6).

2. A system according to Claim 1, characterised in that the hooks are formed by curved members (8) bent to a U-shape and the web portions of which are so mounted on those surfaces of the square-section columns (6) which are directed at the centre that the arms of the members (8) point upwardly.

3. A system according to Claim 1, characterised in that in the case of the inserts (11), in the middle of the upper and lower horizontal members (14, 15) of their frame there is at right-angles to the plane of the frame a rectangularly U-shaped curved member the web of which forms a third vertical arm (18) while its lengthened lower horizontal arm (17) crosses the lower arm (15) of the frame, feet being provided at the ends of these arms.

4. A system according to Claim 3, characterised in that a plurality of supporting means (10) intended for plates (23) and taking the form of horizontal circular rings (20) are disposed on the inserts (11) and are positioned at intervals above one another.

5. A system according to Claim 4, characterised in that the rings (20) are fixed by means of in each case three outwardly radially projecting supports (21) on the three vertical arms (12, 13, 18) of the insert (11).

6. A system according to Claim 5, characterised in that the rings (20) are provided with synthetic plastics damping members (22).

7. A system according to Claim 1, characterised in that on their vertical arms (25), the inserts (24) have superposed at intervals horizontal bow-shaped members (26) directed to one side and in that the oppositely disposed bow-shaped members (26) of two inserts (24) suspended on opposite sides of the supporting frame serve as support rails for trays (30).

8. A system according to Claim 7, characterised in that the bow-shaped members (26) have a rectilinear middle portion (27) and adjacent both ends thereof, downwardly directed leg portions (28) the end portions (29) of which are angled over into the horizontal plane and are seated on the vertical arms (25) of the insert (24).

9. A system according to Claim 1, characterised in that holders for drinks bottles and/or drinking glasses are fitted on the inserts.

10. A system according to Claim 3, characterised by, adapted to be fixed on a wall and intended to accommodate an insert (11), a holder in the form of a frame (32, 33) from the upper part of which two support arms (36) with hooks (37) at their ends project forwardly and of which the lower part has a ring, the hooks (37) receiving the upper horizontal arm (14) of the insert (11) while the ring engages around the rear foot of the insert.

11. A system according to Claim 10, characterised in that the holder has a rectangular frame (32, 33) and in that the support arms (36) have fixing arms (38) which are angled over once in the plane of the frame and in that the ring is formed by a forwardly and outwardly bulging (at 40) cross arm (39).

12. A system according to Claim 1, characterised in that the inserts (11, 24) are made from chromium plated wire.

13. A system according to Claim 10, characterised in that the holder (Fig. 7) is made from chromium plated wire.

**Revendications**

1. Système pour le dépôt et le transport, en particulier dans le domaine gastronomique, comportant un bâti porteur mobile (4,5) muni de quatre colonnes verticales carrées (6), agencées en forme de carré, dirigées parallèlement aux diagonales du carré avec leurs faces latérales et reliées ensemble, en haut (7) et en bas (1),

caractérisé en ce que des châssis (11,24), pouvant être accrochés et présentant plusieurs dispositifs de maintien (10,27) pour des objets (23,30) à déposer ou à transporter, sont prévus sur les colonnes carrées (6), et en ce que les châssis (11,24) comportent, à chaque fois, un cadre rectangulaire présentant des branches horizontales et verticales (14,15 ou 12,13 ; 25), dont la largeur correspond environ à l'écartement de deux colonnes carrées adjacentes (6) du bâti porteur, et qui est accroché, dans la zone de ses quatre coins, dans des crochets fixés sur les colonnes carrées (6).

2. Système selon la revendication 1,
caractérisé en ce que les crochets sont formés d'étriers (8) cintrés en forme de U et agencés, par leur âme, sur les faces tournées vers le centre des colonnes carrées (6), de sorte que leurs branches sont dirigées vers le haut.

3. Système selon la revendication 1,
caractérisé en ce que, pour les châssis (11), au milieu des branches horizontales supérieure et inférieure (14 ou 15) de leur cadre, est agencée, perpendiculairement au plan du cadre, une partie d'étrier, à angles droits et en forme de U, dont l'âme forme une troisième branche verticale (18) et dont la branche horizontale inférieure prolongée (17) croise la branche inférieure (15) du cadre, des pieds étant agencés aux extrémités de ces branches.

4. Système selon la revendication 3,
caractérisé en ce que plusieurs dispositifs de maintien (10) prévus pour des assiettes (23), en forme d'anneaux circulaires horizontaux (20), sont agencés les uns au-dessus des autres avec un écartement sur les châssis (11).

5. Système selon la revendication 4,
caractérisé en ce que les anneaux (20) sont fixés sur les trois branches verticales (12, 13, 18) du châssis (11), à l'aide à chaque fois de trois saillies (21) dirigées radialement vers l'extérieur.

6. Système selon la revendication 5,
caractérisé en ce que les anneaux (20) sont munis de tubes d'amortissement (22) en matière synthétique.

7. Système selon la revendication 1,
caractérisé en ce que les châssis (24) comportent, sur leurs branches verticales (25), des étriers horizontaux (26) agencés les uns au-dessus des autres avec un écartement et dirigés vers un côté, et en ce que les étriers opposés (26), de deux châssis (24) accrochés à des côtés opposés du bâti porteur, servent comme rails d'appui pour des plateaux (30).

8. Système selon la revendication 7,
caractérisé en ce que les étriers (26) présentent un tronçon central rectangulaire (27) et des tronçons coudés (28) qui y sont raccordés des deux côtés, qui sont dirigés vers le bas, qui sont courbés au niveau de leurs tronçons extrêmes (29) dans le plan horizontal et qui reposent sur les branches verticales (25) du châssis (24).

9. Système selon la revendication 1,
caractérisé en ce que des attaches pour des bouteilles de boissons et/ou des verres à boire sont agencées sur les châssis.

10. Système selon la revendication 3,
caractérisé par un élément porteur destiné à recevoir un châssis (11), pouvant être fixé sur une paroi, en forme d'un cadre (32, 33), à la partie supérieure duquel deux bras porteurs (36) munis de crochets (37) font saillie par leurs extrémités vers l'avant et dont la partie inférieure comporte un cavalier, les crochets (37) recevant la branche horizontale supérieure (14) du châssis (11) et le cavalier entourant le pied arrière du châssis.

11. Système selon la revendication 10,
caractérisé en ce que l'élément porteur comporte un cadre rectangulaire (32,33), en ce que les bras porteurs (36) comportent des branches de fixation (38), qui sont courbées une fois dans le plan du cadre, et en ce que le cavalier est formé d'une branche transversale (39) emboutie vers l'avant (40).

12. Système selon la revendication 1,
    caractérisé en ce que les châssis (11,24) sont réalisés en fil métallique chromé.

13. Système selon la revendication 10,
    caractérisé en ce que l'élément porteur (figure 7) est réalisé en fil métallique chromé.

FIG.1

FIG.2

FIG.3

EP 0 551 315 B1

FIG. 4

FIG. 7

FIG. 5

FIG. 6

14